# EUROPÄISCHE PATENTANMELDUNG

(11) **EP 3 981 850 A2**
(43) Veröffentlichungstag der Anmeldung: **13.04.2022**
(21) Anmeldenummer: 21201534.1
(22) Anmeldetag: 07.10.2021
(51) Int. Cl.: C09J 5/06, C08J 5/12

(54) **VERBINDUNGSMASSE ZUM STOFFSCHLÜSSIGEN VERBINDEN VON KUNSTSTOFFBAUTEILEN, BAUSATZ ZUM HERSTELLEN EINES KUNSTSTOFFTEILS UND DESSEN VERWENDUNG, VERFAHREN ZUM HERSTELLEN EINES KUNSTSTOFFTEILS UND VERFAHREN ZUM VERBINDEN VON KUNSTSTOFFBAUTEILEN SOWIE KRAFTFAHRZEUGBAUTEIL**

(30) Priorität: 09.10.2020 DE 102020126608
(71) Anmelder: WOCO Industrietechnik GmbH, 63628 Bad Soden-Salmünster (DE)
(72) Erfinder: LOTZ, Alexandra, 63571 Gelnhausen (DE)
(74) Vertreter: Schmid, Nils T.F.

(57) **Zusammenfassung**

Die vorliegende Erfindung betrifft eine Verbindungsmasse zum stoffschlüssigen Verbinden von zwei oder mehr Kunststoffbauteilen, umfassend ein Lösungsmittel und ein Polymermaterial, jeweils aus den gleichen oder ähnlichen Polymeren, aus denen die Kunststoffbauteile gebildet sind. Ferner betrifft die Erfindung einen Bausatz zum Herstellen eines Kunststoffteils, umfassend ein erstes und ein zweites Kunststoffbauteil und eine erfindungsgemäße Verbindungsmasse. Außerdem betrifft die Erfindung ein Verfahren zum Herstellen eines Kunststoffteils, bei dem ein erstes und ein zweites Kunststoffbauteil sowie eine erfindungsgemäße Verbindungsmasse bereitgestellt werden, wobei eine Verbindung zwischen dem erstem Kunststoffbauteil, dem Polymermaterial der Verbindungsmasse und dem zweitem Kunststoffbauteil durch Verflüchtigen des Lösungsmittels und gegebenenfalls Anschmelzen der polymeren Materialien erfolgt. Weiterhin betrifft die Erfindung ein Kraftfahrzeugbauteil, umfassend zwei oder mehr Kunststoffbauteile, die mittels einer erfindungsgemäßen Verbindungsmasse stoffschlüssig miteinander verbunden sind. Schließlich betrifft die Erfindung die Verwendung des erfindungsgemäßen Bausatzes für die Herstellung eines Kraftfahrzeugbauteils oder für das Verbinden von Kunststoffbauteilen aus thermoplastischen Polymeren.

## Beschreibung

Die vorliegende Erfindung betrifft eine, insbesondere viskose oder pastöse, Verbindungsmasse zum stoffschlüssigen Verbinden von zwei oder mehr Kunststoffbauteilen derselben oder ähnlicher Polymerstruktur. Des Weiteren stellt die vorliegende Erfindung ein Verfahren und einen Bausatz zum Herstellen eines Kunststoffteils aus zwei oder mehr Kunststoffbauteilen derselben oder ähnlicher Polymerstruktur bereit. Ferner betrifft die vorliegende Erfindung ein Kraftfahrzeugbauteil, insbesondere Abdeckungsbauteil, wie eine Medienleitung und/oder einen Medienverteiler, einen Aktuator, ein Ventil, eine Batterieeinkapselung eine Scheinwerferabdeckung oder ein Dichtungs- und/oder Entkopplungselement. Außerdem betrifft die Erfindung ein Verfahren zum Verbinden von Kunststoffbauteilen sowie die Verwendung des erfindungsgemäßen Bausatzes für die Herstellung von Kunststoffteilen.

Bei den herzustellenden Kunststoffteilen kann es sich beispielsweise um Struktur- und/oder Abdeckungsbauteile in beispielsweise einem Kraftfahrzeug handeln, wie beispielsweise eine Medienleitung und/oder -verteiler, einen Aktuator, (eine Batterieeinkapselung, eine Scheinwerferabdeckung oder ein Dichtungs- bzw. Entkopplungselement.

Im Stand der Technik existieren diverse Fügeverfahren für Kunststoffteile. Insbesondere für funktionelle Bauteile aus technischen Thermoplasten werden aufgrund der hohen Belastbarkeit der Verbindungsstellen Schweißverfahren angewandt. Hier entscheiden die spätere Geometrie, die Materialanforderungen sowie Bauteilbeanspruchung, welches der Schweißverfahren angewandt werden muss, die jeweils Vor- und Nachteile haben. Somit besteht grundsätzlich ein Bedarf nach einer Verfahrensverbesserung beim Fügen und insbesondere Schweißen von Kunststoffbauteilen. Beispielsweise besitzen Heißgas- oder Infrarotschweißverfahren den Nachteil, dass diese technisch wie energetisch sehr aufwendig sind und relativ lange Zykluszeiten benötigen. Das Laserschweißverfahren benötigt speziell angepasste Materialien. Eine weitere Alternative stellt das kombinierte Infrarot-Heißgasschweißen dar, das allerdings eine lange Prozesszeit benötigt, um ein qualitativ hochwertiges Kunststoffbauteil herzustellen. Weitere Fügeverfahren, wie Vibrations- bzw. Rotationsschweißen, erfordern Nacharbeitsschritte, um beispielsweise Sauberkeitsanforderungen der Kunststoffteile sicherzustellen. Bei dem Ultraschallschweißen ist eine Voraussetzung eine sehr hohe Präzision der zu verbindenden spritzgegossenen Kunststoffteile. Zusammenfassend ist der Anmelderin der vorliegenden Erfindung kein universelles Fügeverfahren für Kunststoffbauteile bekannt, welches sich für eine Massenfertigung bzw. Großserienfertigung eignet. Ein weiterer Nachteil der bekannten Fügeverfahren besteht darin, dass nur bestimmte Bauteilgeometrien mit den bislang bekannten Fügeverfahren verarbeitet werden können.

Aus EP 3 527 639 A1 ist ein Verfahren zum Verbinden eines thermoplastischen Werkstoffs mit einem anderen Werkstoff bekannt, bei dem eine ionische Flüssigkeit zwischen die zu verklebenden Werkstoffe aufgetragen wird und mittels Mikrowellen bestrahlt wird, um den thermoplastischen Werkstoff zum Schmelzen zu bringen. Die ionische Flüssigkeit stellt dabei eine Art Mikrowellenabsorber dar, der die notwendige Energie und Wärme zum Verbinden der beiden Werkstoffe liefert. Nachteilig an dem Verfahren gemäß EP 3 527 639 A1 ist vor allem, dass aufgrund des benötigten Aufschmelzens der benachbarten Grenzflächen der Werkstoffe für eine mögliche Verbindung eine Schwächung des Endprodukts einhergeht, bei dem vor allem die Verbindungsstelle aufgrund der darin eingeschlossenen ionischen Flüssigkeit zwischen den beiden Werkstoffen eine Schwachstelle darstellt. Ein weiterer Nachteil besteht aufgrund der Verwendung der ionischen Flüssigkeit, welche stark fließfähig ist sowie die eine hohe Oberflächenspannung aufweist und somit nur bedingt zwischen und vor allem auf den zu verklebenden Werkstoffen verbleibt. Aufgrund der hohen Fließfähigkeit der ionischen Flüssigkeit ist ferner eine sehr genaue Ausrichtung der zu verklebenden Werkstoffe notwendig, insbesondere dürfen die zu verklebenden Werkstoffe nur in einem geringen Abstand zu einander positioniert werden oder mit anderen Worten, die zu verbindenden Werkstoffe müssen vornherein eine hohe Maßhaltigkeit aufweisen. Mittels des Verfahrens gemäß EP 3 527 639 A1 können außerdem ausschließlich im Wesentlichen zueinander parallel orientierte, miteinander in Kontakt stehende Verbindungs-Grenzflächen, ohne jeglichen Spalt, miteinander gefügt werden. Die Geometriemöglichkeiten der herstellbaren Kunststoffteile sind damit stark begrenzt.

Eine Aufgabe der vorliegenden Erfindung besteht darin, die Nachteile des Stands der Technik zu überwinden, insbesondere eine Verbindungsmasse und ein Herstellungsverfahren bereit zu stellen, mit der/mit dem beliebige Bauteilgeometrien unter Verwendung von Kunststoffbauteilen miteinander verbunden werden können und/oder mit der/mit dem die Verbindungs- bzw. Fügestelle zwischen den zu verbindenden Kunststoffbauteilen verstärkt ist.

Demgemäß wurde eine Verbindungsmasse, insbesondere pastöse Verbindungsmasse, zum stoffschlüssigen Verbinden von zwei oder mehr, insbesondere zweier, Kunststoffbauteile, jeweils enthaltend oder gebildet aus thermoplastischen Polymeren, den Vorstufen duroplastischer Polymere, thermoplastischen Elastomeren oder Elastomeren, gefunden, umfassend mindestens ein Lösungsmittel und ein, vorzugsweise darin vollständig oder in Teilen gelöstes oder lösbares, thermoplastisches Polymermaterial oder ein Polymermaterial aus thermoplastischen Elastomeren oder Vorstufen eines duroplastischen Polymermaterials oder Vorstufen für das Polymermaterial aus Elastomeren, jeweils aus den gleichen Polymeren, aus denen die Kunststoffbauteile gebildet oder die hierin enthalten sind, oder aus Polymeren, die mit den Polymeren, aus denen die Kunststoffbauteile gebildet oder die hierin enthalten sind, zumindest in Teilen mischbar sind. Für die Mischbarkeit kann insbesondere auf Temperaturen abgestellt werden, bei denen diese Polymere im schmelzflüssigen bzw. flüssigen Zustand vorliegen.

In einer besonders zweckmäßigen Ausführungsform kann dabei vorgesehen sein, dass die thermoplastischen Polymere, die Vorstufen duroplastischer Polymere, die Vorstufen für das Polymermaterial aus Elastomeren, die thermoplastischen Elastomere oder die Elastomere polare funktionelle Gruppen enthalten. Durch die Verwendung polarer funktioneller Gruppen können in der erfindungsgemäßen Verbindungsmasse vorliegenden die genannten Polymere bzw. die genannten Vorstufen von Polymeren eine verbesserte Empfindlichkeit gegenüber Mikrowellenstrahlung aufweisen und besonders effizient insbesondere an der Bauteiloberfläche in den schmelzflüssigen Zustand überführt werden.

Für das Lösungsmittel der erfindungsgemäßen Verbindungmassen wird bevorzugt auf ein polares Lösungsmittel zurückgegriffen. Besonders bevorzugte Lösungsmittel können dabei ausgewählt werden aus der Gruppe bestehend aus Ketonen, insbesondere Aceton, Cyclohexanon, Cyclopentanon, 2-Pentanon, 3-Pentanon, Methylisobutylketon und/oder Methylethylketon; Lactonen insbesondere γ-Butyrolacton, Lactamen insbesondere *N*-Methyl-2-pyrrolidon, Nitrilen insbesondere Acetonitril, Propannitril und/oder Benzonitril; Nitroverbindungen, insbesondere Nitroalkane, z.B. Nitromethan, Nitroethan, Nitropropan und/oder Nitrobutan, Carbonsäureamide insbesondere Dimethylformamid, N-Methylformamid, Formamid, Hexamethylphosphorsäuretriamid, und/oder Dimethylacetamid, Harnstoffderivaten, insbesondere Tetramethylharnstoff und/oder Dimethylpropylenharnstoff, Sulfoxiden, insbesondere Dimethylsulfoxid, Sulfonen insbesondere Sulfolan; Carbonsäuren, insbesondere C1- bis C6-Alkansäuren, z.B. Ameisensäure, Essigsäure und/oder Propionsäure, Carbonsäureestern der Ameisensäure, Essigsäure, Propionsäure und/oder Terephthalsäure, insbesondere Ethylacetat, Isopropylacetat, n-Propylacetat, t-Butylacetat, n-Butylacetat, , Ethylpropionat; Anhydriden der Ameisensäure, Essigsäure, Propionsäure und/oder Terephthalsäure; Carbonaten, insbesondere Dimethylcarbonat, Diethylcarbonat und/oder Propylencarbonat; Alkoholen, insbesondere Ethanol, Methanol, 1-Butanol, 2-Butanol, t-Butanol, 2-Propanol, 1-Propanol, 2-Methoxyethanol, Tetrahydrofurylalkohol, Benzylalkohol, Isoamylalkohol, 2-Pentanol, 2-Ethylhexanol und/oder Cyclohexanol; Polyalkoholen, insbesondere Glycerin, Ethylenglykol, Propylenglykol, 1,4-Butandiol, 1,2-Propandiol, 1,3-Propandiol, Di-Propylenglykol, Diemethylenglykol und/oder Diethylenglykol, mehrwertige Alkohole und/oder Polyetherpolyole, insbesondere Ethylenglykoldimethylether; Aldehyden, insbesondere Furfural; substituierten Aromaten, insbesondere Chlorbenzol, Dichlorbenzol, Dinitrobenzol, Nitrobenzol, Chinolin und/oder Pyridin, und deren beliebigen Mischungen, gegebenenfalls jeweils versetzt mit einer Mindermenge an Wasser.

Auch durch die Verwendung von polaren Lösungsmitteln gelingt regelmäßig eine effektive Wechselwirkung mit Mikrowellenstrahlung, wodurch die Verbindungsmasse und die darin enthaltenen Komponenten wie auch die Kunststoffbauteile, mit denen die Verbindungsmasse in Verbindung gebracht wird, erwärmt und, sofern gewünscht, gezielt in den schmelzeflüssigen bzw. flüssigen Zustand überführt werden können.

Das insbesondere polare Lösungsmittel stellt demgemäß in einer zweckmäßigen Ausgestaltung einen Strahlungsabsorber, insbesondere einen Mikrowellen-Absorber, dar. Dieser ist vorzugsweise dazu eingerichtet ist, bei einer Einwirkung, insbesondere mittels Mikrowellen, sich derart zu erhitzen, dass zum Beispiel das in Teilen in dem Lösungsmittel vorliegende noch ungelöste Polymermaterial wenigstens bereichsweise in den schmelzviskosen oder schmelzeflüssigen Zustand übergeht. In einer besonders zweckmäßigen Ausgestaltung werden durch die Verwendung des Lösungsmittels als Strahlungsabsorber gegebenenfalls auch die zwei oder mehr zu verbindenden Kunststoffbauteile wenigstens im Bereich der zu verbindenden jeweiligen Verbindungsflächen in den schmelzeviskosen oder schmelzeflüssigen Zustand überführt.

Die erfindungsgemäßen Verbindungsmassen können in einer geeigneten weiteren Ausführungsform einen oder mehrere Mikrowellen-Absorber enthalten.

Besonders geeignete Mikrowellen-Absorber für die erfindungsgemäßen Verbindungsmassen sind dabei ausgewählt aus der Gruppe bestehend aus anorganischen Alkalisalzen, insbesondere Natriumchlorid, Kaliumfluorid und/oder Kaliumiodid, gegebenenfalls in Kombination mit Al₂O₃; anorganischen Erdalkalisalzen, insbesondere Calciumchlorid; Alkalisalzen von Carbonsäuren, insbesondere von Alkansäuren; Erdalkalisalzen von Carbonsäuren, insbesondere von Alkansäuren; Spinellen wie Magnetit und insbesondere CuNi_{0,5}Mn_{1,5}O₄, V₂O₅ und/oder Al₂O₃; Metallpulver, insbesondere Ni, Fe und/oder Co; Ruß; Siliziumkarbid; Fullerene; Kohlenstoffnanoröhren; Graphit; Graphen; Aktivkohle; organischen Füllstoffen, insbesondere Viskosefasern, Weinsäure, den Salzen der Weinsäure und/oder Xylit; und deren beliebigen Mischungen, enthält. Der Einsatz solcher Mikrowellen-Absorber ist häufig empfehlenswert bei Verwendung von unpolaren Lösungsmitteln in den erfindungsgemäßen Verbindungsmassen.

In alternativen Ausgestaltungen kann demgemäß auch für die erfindungsgemäßen Verbindungsmassen auch auf ein unpolares Lösungsmittel zurückgegriffen werden, insbesondere ausgewählt ist aus der Gruppe bestehend aus aromatischen Lösungsmitteln, insbesondere Toluol, Xylol und/oder Benzol, aliphatischen Lösungsmitteln, insbesondere Cyclohexan, Hexan, Heptan und/oder Pentan, etherischen Lösungsmitteln, insbesondere Diethylether und/oder Tetrahydrofuran, chlorierten Lösungsmitteln, insbesondere Dichlormethan, Chloroform und/oder Dichlorethan, fluorierten Lösungsmitteln, insbesondere Perfluorhexan, und deren beliebigen Mischungen.

Die Wahl des Lösungsmittels hängt hierbei nicht unmaßgeblich von der Polarität bzw. fehlenden Polarität der Polymere der zu verbindenden Kunststoffbauteile wie auch insbesondere von der Polarität bzw. fehlenden Polarität des Polymermaterials der erfindungsgemäßen Verbindungsmasse ab. Dabei ist das Lösungsmittel derart auszuwählen zweckmäßigerweise derart auszuwählen, dass das Polymermaterial und/oder die Polymere der zu verbindenden Polymerbauteile darin zumindest in Teilen bei einer Temperatur, bei der das Lösungsmittel noch stets flüssig ist, gelöst vorliegt.

Die Menge an Lösungsmittel in den erfindungsgemäßen Verbindungsmassen wird in vielen zweckmäßigen Ausgestaltung derart gewählt, dass sie ausreicht, das, insbesondere in Granulat- oder Pulverform vorliegende oder eingesetzte, Polymermaterial vollständig zu benetzen.

In Abhängigkeit von temperaturabhängigen Löslichkeitseigenschaften der Polymermaterialien in den/dem Lösungsmittel der erfindungsgemäßen Verbindungsmasse kann diese eine Suspension oder eine Lösung darstellen.

Die erfindungsgemäßen Verbindungsmassen verfügen dabei bevorzugt über eine Viskosität, bestimmt gemäß DIN EN ISO 3219:1994-10 bei einer Temperatur von 20 °C, im Bereich von 10³ mPas bis 8×10⁶ mPas.

Die erfindungsgemäße Verbindungsmasse ist in einer bevorzugten Ausgestaltung derart ausgelegt und eingerichtet, dass bei der Verflüchtigung des Lösungsmittels bei einer vorbestimmten Temperatur, insbesondere Raumtemperatur, die zwei oder mehr, insbesondere zwei, Kunststoffbauteile, zwischen denen diese Verbindungsmasse vorliegt, stoffschlüssig miteinander verbindbar sind. Hierbei kann insbesondere vorgesehen sein, dass das Polymermaterial der Verbindungsmasse derart auf die thermoplastischen Polymere, die duroplastischen Polymere, die thermoplastischen Elastomere oder die Elastomere der zu verbindenden Kunststoffbauteile abgestimmt ist, dass bei einer Verflüchtigung des Lösungsmittels bei einer vorbestimmten Temperatur, insbesondere Raumtemperatur, die zwei Kunststoffbauteile stoffschlüssig miteinander verbindbar sind.

Für das thermoplastische Polymermaterial der erfindungsgemäßen Verbindungsmasse und/oder für die thermoplastischen Polymere der zu verbindenden Kunststoffbauteile kann zurückgegriffen werden auf solche ausgewählt aus der Gruppe bestehend aus Polyolefinen, insbesondere Polyethylen und/oder Polypropylen, Polyamiden, Polyimiden, Polyetherimiden, Polyethern, Polysulfonen, Polyetherpolyurethanen, Polyethersulfonen, Polyetherketonen, Polyketonen, Polyestern, Polyacrylaten, insbesondere Polymethylmethacrylat, Polyvinylchlorid, Polyvinylidendifluorid, Polycarbonat, Acrylnitril/Butadien/Styrol-Copolymeren und deren beliebigen Mischungen oder dass das duroplastische Polymermaterial und/oder die duroplastischen Polymere der zu verbindenden Kunststoffbauteile ausgewählt sind aus der Gruppe bestehend aus Epoxyharzen, Methacrylatharzen, Phenolharzen, Polyesterharzen, z.B. ungesättigten Polyesterharzen, Polyurethanharzen, z.B. Zwei-Komponenten-Polyurethanschäume, Vinylesterharzen, z.B. ungesättigten Vinylesterharzen, vernetzten, insbesondere strahlenvernetzten, Thermoplaste, z.B. strahlenvernetztem Polypropylen, und deren beliebigen Mischungen oder dass die Polymere der thermoplastischen Elastomere und/oder das Polymermaterial aus den thermoplastischen Elastomeren ausgewählt ist aus der Gruppe bestehend aus thermoplastischen Elastomeren auf Basis von Ethylen-Vinylacetat-Copolymeren; Polyhydroxybutyrat; Polylactiden; Polyetherimiden; Polyoxymethylen; Polycarbonaten; Polystyrol; schlagzähmodifiziertem Polystyrol; Styrol-basierten Copolymeren, insbesondere ABS, SAN, PS, HIPS, ASA und/oder SEBS; olefinisch-basierten thermoplastischen Elastomeren, insbesondere LLDPE, EOC, TPV und/oder EVA; PE/Polyester-basierten thermoplastischen Elastomeren; Urethan-basierten thermoplastischen Elastomeren; Polyether-Block-Amiden; PVC; Polyurethanen, insbesondere thermoplastischen Polyurethanen, und thermoplastischer Stärke und beliebigen Mischungen hiervon, oder dass die Polymere der Elastomere und/oder das Polymermaterial aus den Elastomeren Elastomere ausgewählt sind aus der Gruppe bestehend aus Acrylnitril/Butadien/Acrylat-Copolymeren, Acrylnitril/chloriertes Polyethylen/Styrol-Copolymeren, Acrylnitril/Methylmethacrylat-Copolymeren, Ethylen-Ethylacrylat-Copolymeren, Ethylen-Propylen-Copolymeren, Ethylen-Propylen-Dien-Copolymeren, Vinylchlorid/Ethylen-Copolymeren, Vinylchlorid/Ethylen/Methacrylat-Copolymeren, Polyisobutylen, Polyvinylbutyral, Butadien-Kautschuk, Butylkautschuk, Chloropren-Kautschuk, Fluor-Kautschuk, Isopren-Kautschuk, Natur-Kautschuk, Silikon-Kautschuk, Styrol-butadien-Kautschuk und deren beliebigen Mischungen, insbesondere auf Basis von Polyethylen, Polypropylen, Polyamiden, Polyethylenterephthalat oder Polybutylenterephthalat.

Für das Polymermaterial der erfindungsgemäßen Verbindungsmassen kommt in einer Ausgestaltung bevorzugt ein unvernetzter Kautschuk oder eine unvernetzte Kautschukmischung oder eine unvernetzte Vorstufe eines Duroplasten zum Einsatz.

Von besonderem Vorteil sind hierbei solche erfindungsgemäßen Verbindungsmassen, bei denen die thermoplastischen Polymere oder die duroplastischen Polymere oder die Polymere der thermoplastischen Elastomeren oder die Polymere der Elastomere der Kunststoffbauteile jeweils übereinstimmen und/oder bei denen das thermoplastische Polymer oder duroplastische Polymer oder das Polymer der thermoplastischen Elastomere oder das Polymer der Elastomere der Kunststoffbauteile und das thermoplastische Polymermaterial der erfindungsgemäßen Verbindungsmasse, die Vorstufe des duroplastischen Polymermaterial, das Polymermaterial der thermoplastischen Elastomere bzw. das Polymermaterial der Elastomervorstufe der Verbindungsmasse jeweils übereinstimmen. Hierdurch gelangt man regelmäßig zu miteinander im schmelzflüssigen Zustand mischbaren Polymeren.

Für vielfältige Anwendungen hat es sich überraschenderweise als vorteilhaft erwiesen, insbesondere wenn miteinander verbundene Kunststoffbauteile mit sehr ausgeprägter mechanischer Stabilität auch an der Verbindungsstelle erhalten werden sollen, dass das thermoplastische Polymer, das duroplastische Polymer, das Polymer des thermoplastischen Elastomeren oder das Polymer des Elastomeren wenigstens eines Kunststoffbauteils und/oder, vorzugsweise und, das thermoplastische Polymermaterial, das duroplastische Polymermaterial, das Polymermaterial der thermoplastischen Elastomere oder das Polymermaterial der Elastomeren oder die Vorstufen des duroplastischen Polymermaterials oder die Vorstufen für das Polymermaterial aus Elastomeren der Verbindungsmasse Fasern, insbesondere Glasfasern, enthalten/enthält.

Geeignete thermoplastische Polymere, die als Polymermaterialien für die erfindungsgemäßen Verbindungsmassen sowie insbesondere auch für die zu verbindenden Kunststoffbauteile verwendet werden können, umfassen auch solche mit unpolaren funktionellen Gruppen. Unter diesen sind solche thermoplastischen Polymere mit unpolaren funktionellen Gruppen bevorzugt, und zwar insbesondere für die zu verbindenden Kunststoffbauteile, die ausgewählt sind aus der Gruppe bestehend aus Polyolefinen, insbesondere Polyethylen und/oder Polypropylen, Polybuten, Polyisobuten, Polyetherketonen insbesondere PEK, PEEK, Polyethylenterephthalat, Polybutylenterephthalat, Polyphenylensulfid, Polyphenylensulfone, Polyacetal, insbesondere Polyoxymethylen, Polystyrol, Polytetrafluorethylen und deren beliebigen Mischungen.

Als unpolares thermoplastisches Polymermaterial für die erfindungsgemäßen Verbindungsmassen kommen insbesondere Polyolefine, z.B. Polyethylen und/oder Polypropylen, in Betracht. Hierbei wird bevorzugt auf Lösungsmittel mit einer Permittivität (bei 25 °C) kleiner 15, bevorzugt kleiner 10 und besonders bevorzugt kleiner 5, zurückgegriffen. Erfindungsgemäße Verbindungsmassen, die mit den vorangehend spezifizierten unpolaren thermoplastischen Polymermaterialien ausgestattet sind, verfügen vorteilhafter Weise über mindestens einen Mikrowellen-Absorbern, bevorzugt in einer Menge im Bereich von 0,01 bis 5 Gew.-% und besonders bevorzugt im Bereich von 0,1 bis 1,0 Gew.-%, jeweils bezogen auf die Menge an Polymermaterial.

Das Polymermaterial, insbesondere das thermoplastische Polymermaterial, der erfindungsgemäßen Verbindungsmassen wird vorzugsweise als Granulat oder in Pulverform in diese Verbindungsmasse eingetragen.

Für bevorzugte Auführungsformen einer erfindungsgemäßen Verbindungsmassen greift man als Polymermaterial auf thermoplastisches Hochtemperatur-Polymermaterial zurück. Dieses kann dabei bevorzugt ausgewählt sein aus der Gruppe bestehend aus Polyetheretherketonen, Polyetherketonen, Polyimiden, Polyamidimiden, Polysulfonen, Polyethersulfonen, Polyvinylidendifluorid, Polyphenylensulfonen, Polyphenylensulfid und/oder Polyacetalen. Hierbei weist das Lösungsmittel regelmäßig vorzugsweise eine Permittivität (bei 25 °C) größer oder gleich 15, insbesondere größer oder gleich 20, auf und/oder, vorzugsweise und, stellt ein protisches Lösungsmittel, insbesondere eine Carbonsäure, dar. Erfindungsgemäße Verbindungsmassen, die mit den vorangehend spezifizierten thermoplastischen Hochtemperatur-Polymermaterialien ausgestattet sind, sind, abgesehen von dem Lösungsmittel als möglichem Mikrowellen-Absorber, vorzugsweise im Wesentlichen frei von Mikrowellen-Absorbern.

In den erfindungsgemäßen Verbindungsmassen sowie insbesondere in den zu verbindenden Kunststoffbauteilen liegen die duroplastischen Polymere insbesondere als teilvernetzte duroplastische Polymere, bevorzugt mit einem Vernetzungsgrad von maximal 80 % und besonders bevorzugt mit einem Vernetzungsgrad von maximal 70 %, vor. Alternativ sowie insbesondere zusätzlich kann dabei vorgesehen sein, dass das duroplastische Polymermaterial der erfindungsgemäßen Verbindungsmasse teilvernetztes duroplastisches Polymermaterial, bevorzugt mit einem Vernetzungsgrad von maximal 80 %, besonders bevorzugt mit einem Vernetzungsgrad von maximal 70 %, darstellt. Ferner kann in einer besonders zweckmäßigen Ausgestaltung vorgesehen sein, dass die Vorstufen des duroplastischen Polymermaterials der Verbindungsmasse unvernetzt vorliegen.

Wird für das Polymermaterial der erfindungsgemäßen Verbindungsmassen auf Elastomere zurückgegriffen, verfügen diese bevorzugt über einen Vernetzungsgrad, bestimmt gemäß DIN 16892:2019-10, nicht oberhalb von 60 %, vorzugsweise nicht oberhalb von 50 %.

In einer bevorzugten Ausführungsform der erfindungsgemäßen Verbindungsmasse kann vorgesehen sein, dass das Polymermaterial, vorzugsweise in einer Hauptmenge, mindestens ein thermoplastisches Polymer, insbesondere Polyamid und/oder PEEK, darstellt oder umfasst und dass das Lösungsmittel eine C1- bis C6-Alkansäure, insbesondere Methansäure, vorzugsweise im Gemisch mit einer Mindermenge an Wasser, darstellt oder umfasst.

In einer weiteren bevorzugten Ausführungsform der erfindungsgemäßen Verbindungsmasse kann vorgesehen sein, dass das Polymermaterial, vorzugsweise in einer Mindermenge, Polytetrafluorethylen und/oder Polyvinylidendifluorid darstellt oder umfasst und dass das Lösungsmittel ein fluoriertes Lösungsmittel, insbesondere Perfluorhexan, oder Dimethylformamid darstellt oder umfasst.

In einer weiteren bevorzugten Ausführungsform der erfindungsgemäßen Verbindungsmasse kann ferner vorgesehen sein, dass das Polymermaterial, vorzugsweise in einer Hauptmenge, Polyetherpolyurethan darstellt oder umfasst und dass das Lösungsmittel Dimethylformamid, Dimethylacetamid und/oder Aceton darstellt oder umfasst.

In einer weiteren bevorzugten Ausführungsform der erfindungsgemäßen Verbindungsmasse kann überdies vorgesehen sein, dass das Polymermaterial, vorzugsweise in einer Hauptmenge, mindestens ein unpolares thermoplastisches Polymer, insbesondere Polyethylen und/oder Polypropylen, umfasst oder darstellt und dass das Lösungsmittel Hexan, Heptan und/oder Cyclohexan umfasst.

Auch kann in einer weiteren bevorzugten Ausführungsform der erfindungsgemäßen Verbindungsmasse vorgesehen sein, dass das Polymermaterial, vorzugsweise in einer Hauptmenge, mindestens ein unpolares thermoplastisches Polymer, insbesondere Polystyrol, umfasst oder darstellt und wobei das Lösungsmittel Aceton umfasst oder darstellt.

Schließlich kann in einer weiteren bevorzugten Ausführungsform dass der erfindungsgemäßen Verbindungsmasse vorgesehen sein, dass das Polymermaterial, vorzugsweise in einer Hauptmenge, Polymethylmethacrylat und/oder Polycarbonat umfasst oder darstellt und dass das Lösungsmittel Nitroalkane, insbesondere Nitromethan, Nitroethan, Nitropropan und/oder Nitrobutan, Aceton, Dichlormethan, Ethylacteat, n-Propyl- und n-Butylacetat, Toluol und/oder Xylol umfasst oder darstellt.

Unter den erfindungsgemäßen Verbindungsmassen sind solche bevorzugt, die wenigsten 5 Gew.-%, bevorzugt wenigstens 10 Gew.-% und besonders bevorzugt wenigstens 30 Gew.-% oder 5 bis 99 Gew.-%, bevorzugt 20 bis 88 Gew.-% und besonders bevorzugt 30 bis 75 Gew.-%, jeweils bezogen auf das Gesamtgewicht der Verbindungsmasse, thermoplastisches Polymermaterial, Polymermaterial aus thermoplastischen Elastomeren und/oder Polymermaterial aus Elastomeren oder Vorstufen eines duroplastischen Polymermaterials oder Vorstufen für das Polymermaterial aus Elastomeren, enthalten, wobei die die Verbindungmasse bildenden Komponenten stets 100,0 Gew.-% ergeben. Hierbei kann alternativ oder zusätzlich, insbesondere zusätzlich vorgesehen sein, dass das Lösungsmittel einen Masseanteil, bezogen auf das Gesamtgewicht der Verbindungsmasse, im Bereich von 1 Gew.-% bis 90 Gew.-%, insbesondere von 5 Gew.-% bis 80 Gew. % oder von 10 Gew.-% bis 75 Gew %, enthält, wobei die die Verbindungmasse bildenden Komponenten stets 100,0 Gew.-% ergeben.

Besonders zweckmäßig Ausführungsformen der erfindungsgemäßen Verbindungsmassen zeichnen sich auch dadurch aus, dass sie wenigsten 5 Gew.-%, bevorzugt wenigstens 10 Gew.-% und besonders bevorzugt wenigstens 30 Gew.-%, jeweils bezogen auf das Gesamtgewicht der Verbindungsmasse, in dem Lösungsmittel gelöstes thermoplastisches Polymermaterial, der Vorstufe eines Duroplasten, Polymermaterial aus thermoplastischen Elastomeren und/oder Polymermaterial aus Vorstufen von Elastomeren enthalten oder wenigsten 5 Gew.-%, bevorzugt wenigstens 10 Gew.-% und besonders bevorzugt wenigstens 30 Gew.-%, jeweils bezogen auf das Gesamtgewicht der Verbindungsmasse, in dem Lösungsmittel gelöste Vorstufen des duroplastischen Polymermaterials und/oder gelöste Vorstufen für das Polymermaterial aus Elastomeren aufweisen.

Die der Erfindung zugrunde liegende Aufgabe wird des Weiteren gelöst durch einen Bausatz zum Herstellen eines Kunststoffteils, insbesondere eines Kraftfahrzeugbauteils, wie eines Abdeckungsbauteils, einer Medienleitung und/oder eines Medienverteilers, Aktuator, Batterieeinkapselung, Scheinwerferabdeckung oder Dichtungs- und/oder Entkopplungselement, umfassend mindestens ein erstes Kunststoffbauteil, das insbesondere wie vorangehend im Zusammenhang mit den erfindungsgemäßen Verbindungsmassen beschrieben ausgebildet ist, und mindestens ein zweites Kunststoffbauteil, das ebenfalls wie vorangehend im Zusammenhang mit den erfindungsgemäßen Verbindungsmassen beschrieben ausgebildet ist, jeweils enthaltend oder gebildet aus thermoplastischen Polymeren oder duroplastischen Polymeren oder thermoplastischen Elastomeren oder Elastomeren, und eine erfindungsgemäße Verbindungsmasse zum stoffschlüssigen Verbinden des ersten und zweiten bzw. weiteren Kunststoffbauteils.

Die der Erfindung zugrunde liegende Aufgabe wird des Weiteren gelöst durch einen Bausatz zum Herstellen eines Kunststoffteils, insbesondere eines Kraftfahrzeugbauteils, wie eines Abdeckungsbauteils, einer Medienleitung und/oder eines Medienverteilers, Aktuator, Batterieeinkapselung, Scheinwerferabdeckung oder Dichtungs- und/oder Entkopplungselement, umfassend mindestens ein erstes und mindestens ein zweites Kunststoffbauteil, jeweils enthaltend oder gebildet aus thermoplastischen Polymeren, und eine Verbindungsmasse, insbesondere erfindungsgemäße Verbindungsmasse, zum stoffschlüssigen Verbinden des ersten und zweiten bzw. weiteren Kunststoffbauteils, wobei die Verbindungsmasse mindestens ein polares Lösungsmittel und eine Menge an mindestens einem thermoplastischen Polymermaterial mit polaren funktionellen Gruppen aufweist, wobei diese Menge an dem mindestens einem thermoplastischen Polymermaterial vollständig oder in Teilen gelöst in dem mindestens einen polaren Lösungsmittel vorliegt.

Außerdem wird die der Erfindung zugrunde liegende Aufgabe gelöst durch einen Bausatz zum Herstellen eines Kunststoffteils, insbesondere eines Kraftfahrzeugbauteils, wie eines Abdeckungsbauteils, einer Medienleitung und/oder eines Medienverteilers, Aktor, Batterieeinkapselung, Scheinwerferabdeckung oder Dichtungs- und/oder Entkopplungselement, umfassend mindestens ein erstes und mindestens ein zweites Kunststoffbauteil, jeweils enthaltend oder gebildet aus thermoplastischen Polymeren, und eine Verbindungsmasse, insbesondere erfindungsgemäße Verbindungsmasse, zum stoffschlüssigen Verbinden des ersten und zweiten bzw. weiteren Kunststoffbauteils, wobei die Verbindungsmasse mindestens ein unpolares Lösungsmittel, eine Menge an mindestens einem thermoplastischen Polymermaterial mit unpolaren funktionellen Gruppen, wobei diese Menge an dem mindestens einem thermoplastischen Polymermaterial vollständig oder in Teilen gelöst in dem mindestens einen unpolaren Lösungsmittel vorliegt, und/oder mindestens einen Mikrowellen-Absorber, insbesondere Kaliumfluorid, Graphit, Graphen, Ruß, Kohlenstoffnanoröhren, Aktivkohle, Viskosefasern, Weinsäure, den Salzen der Weinsäure, NiZn-Ferrit, Metallsalze der Polymerbestandteile und/oder Metallsalze des Lösungsmittels, aufweist.

Die der Erfindung zugrunde liegende Aufgabe wird des Weiteren gelöst durch ein Verfahren zum Herstellen eines Kunststoffteils, bei dem mindestens ein erstes und mindestens ein zweites Kunststoffbauteil, jeweils enthaltend oder gebildet aus thermoplastischen Polymeren, duroplastischen Polymeren, thermoplastischen Elastomeren oder Elastomeren, bereitgestellt werden und eine, insbesondere pastöse, erfindungsgemäße Verbindungsmasse zwischen und/oder auf jeweilige Verbindungsflächen der Kunststoffbauteile ein- und/oder aufgebracht wird, wobei die erfindungsgemäße Verbindungsmasse mindestens ein Lösungsmittel und ein darin vollständig oder in Teilen gelöstes thermoplastisches Polymermaterial oder Polymermaterial aus thermoplastischen Elastomeren oder Polymermaterial aus unvernetzten Elastomervorstufen aus den gleichen Polymeren, aus denen die Kunststoffbauteile gebildet oder die hierin enthalten sind, oder aus Polymeren, die mit den Polymeren, aus denen die Kunststoffbauteile gebildet oder die hierin enthalten sind, zumindest in Teilen mischbar sind, aufweist, wobei eine Verbindung zwischen dem ersten Kunststoffbauteil, dem Polymermaterial der Verbindungsmasse und dem zweitem Kunststoffbauteil durch Verflüchtigen des Lösungsmittels erfolgt.

Mit dem erfindungsgemäßen Verfahren können zwei oder mehr, insbesondere zwei, Kunststoffbauteile stoffschlüssig miteinander verbunden werden.

Hierbei erfolgt das Verflüchtigen des Lösungsmittels vorzugsweise bei einer vorbestimmten Temperatur, insbesondere Raumtemperatur.

Das erfindungsgemäße Verfahren zeichnet sich auch dadurch aus, dass zumindest die Verbindungsmasse erwärmt wird, insbesondere mittels Mikrowellen.

In einer besonders zweckmäßigen Ausführungsform des erfindungsgemäßen Verfahrens ist vorgesehen, dass sich das Lösungsmittel und/oder der Strahlungsabsorber, insbesondere der Mikrowellen-Absorber, derart erhitzt, dass das thermoplastische Polymermaterial oder das Polymermaterial aus thermoplastischen Elastomeren wenigstens bereichsweise und gegebenenfalls die wenigstens zwei Kunststoffbauteile wenigstens im Bereich der zu verbindenden Verbindungsflächen in den schmelzflüssigen Zustand überführt werden oder dass sich das Lösungsmittel und/oder der Strahlungsabsorber, insbesondere der Mikrowellen-Absorber, derart erhitzt, dass das duroplastische Polymermaterial oder das Polymermaterial aus Elastomeren mit dem duroplastischem Polymermaterial bzw. dem Polymermaterial aus Elastomeren der wenigstens zwei zu verbindenden Kunststoffbauteile wenigstens im Bereich der zu verbindenden Verbindungsflächen wenigstens bereichsweise Vernetzungsreaktionen eingehen.

Das erfindungsgemäße Verfahren kann dabei bevorzugt in einer Weise durchgeführt werden, dass die Verbindungsmasse durch das Erwärmen, insbesondere mittels MikrowellenStrahlung, in den Zustand einer Suspension oder einer Lösung überführt wird.

Außerdem wird die der Erfindung zugrunde liegende Aufgabe gelöst durch ein Verfahren zum Verbinden von Kunststoffbauteilen, umfassend die Schritte
a) Zurverfügungstellen eines erfindungsgemäßen Bausatzes,
b) gegebenenfalls Zurverfügungstellen einer Heiz- oder Bestrahlungseinrichtung,
c) Aufbringen der Verbindungsmasse auf einer Verbindungsfläche des ersten und/oder zweiten Kunststoffbauteils,
d) Kontaktieren von erstem und zweitem Kunststoffbauteil im Bereich der Verbindungsfläche, auf der in Schritt c) die Verbindungsmasse aufgebracht wurde, und
e) Verflüchtigen des Lösungsmittels der Verbindungsmasse und gegebenenfalls Anschmelzen des Polymermaterials der Verbindungsmasse und der Polymere an Kontaktflächen der Kunststoffbauteile, insbesondere unter Wärmeeinwirkung mit Hilfe der Heiz- oder Bestrahlungseinrichtung, unter Verbindung von erstem und zweitem Kunststoffbauteil.

Außerdem wird die der Erfindung zugrunde liegende Aufgabe gelöst durch ein Verfahren zum Verbinden von Kunststoffbauteilen, umfassend die Schritte
a) Zurverfügungstellen eines erfindungsgemäßen Bausatzes,
b) Zurverfügungstellen eines Mikrowellenstrahlers,
c) Anbringen der Verbindungsmasse auf einer Verbindungsfläche des ersten und/oder zweiten Kunststoffbauteils,
d) Kontaktieren von erstem und zweitem Kunststoffbauteil im Bereich der Verbindungsfläche, auf der in Schritt c) die Verbindungsmasse aufgebracht wurde, und
e) Beaufschlagen der gemäß Schritt d) kontaktierten ersten und zweiten Kunststoffbauteile im Bereich der Verbindungsfläche, auf der in Schritt c) die Verbindungsmasse aufgebracht wurde, mit Mikrowellenstrahlung des Mikrowellenstrahlers unter Verflüchtigung des Lösungsmittels und gegebenenfalls Anschmelzens des Polymermaterials der Verbindungsmasse und der Polymere an Kontaktflächen der Kunststoffbauteile und Verbindung von erstem und zweitem Kunststoffbauteil.

Des Weiteren wird die Erfindung zu Grunde liegenden Aufgabe gelöst durch ein Kraftfahrzeugbauteil, insbesondere Abdeckungsbauteil, Medienleitung und/oder Medienverteiler, Aktor, Batterieeinkapselung, Scheinwerferabdeckung oder Dichtungs- und/oder Entkopplungselement, das insbesondere nach dem erfindungsgemäßen Verfahren hergestellt ist, umfassend zwei oder mehr, insbesondere zwei, Kunststoffbauteile, jeweils enthaltend oder gebildet aus thermoplastischen Polymeren, die mittels einer erfindungsgemäßen Verbindungsmasse stoffschlüssig miteinander verbunden sind.

Der erfindungsgemäße Bausatz kann insbesondere für die Herstellung eines Kraftfahrzeugbauteils oder für das, insbesondere stoffschlüssige, Verbindungen von Kunststoffbauteilen aus thermoplastischen Polymeren eingesetzt werden.

Schließlich wird die der Erfindung zugrunde liegenden Aufgabe gelöst durch die Verwendung von flüssigen Carbonsäuren, insbesondere C1- bis C6-Alkansäuren, z.B. Methansäure, Essigsäure und/oder Propionsäure, oder von wässrigen Systemen, enthaltend mindestens eine flüssige Carbonsäure, insbesondere eine C1- bis C6-Alkansäure, z.B. Methansäure, Essigsäure und/oder Propionsäure, für das Verbinden von zwei oder mehreren, insbesondere zweier Kunststoffbauteile, jeweils enthaltend oder gebildet aus thermoplastischen Polymeren, duroplastischen Polymeren, thermoplastischen Elastomeren oder Elastomeren, mittels Mikrowellenstrahlung.

Der vorliegenden Erfindung liegt die überraschende Erkenntnis zugrunde, dass die erfindungsgemäßen Verbindungsmassen sowohl als Klebstoff zur stoffschlüssigen Verbindung von zwei oder mehr Kunststoffbauteilen fungieren kann, als auch vermittels Mikrowellenstrahlung eine "Verschweißung" von Kunststoffbauteilen herbeiführen kann. Hierbei ist auch von Vorteil, dass die erfindungsgemäße Verbindungsmasse problemlos bei Raumtemperatur appliziert werden kann, ohne dass bei Raumtemperatur die darin in dem Lösungsmittel vorliegenden Polymermaterialien bereits in einem gelösten oder schmelzeflüssigen Zustand vorzuliegen haben. Durch die Verwendung von Mikrowellenstrahlung in Gegenwart der erfindungsgemäßen Verbindungsmassen kann nicht nur der Fügeprozess beschleunigt werden, indem das Lösungsmittel sich schneller verflüchtigt. Auch gelingt auf diese Weise regelmäßig problemlos ein Anschmelzen der in Kontakt zu bringenden und zu verbindenden Kontaktflächen der Kunststoffbauteile. Besonders überraschend ist auch die Anwendungsbreite der erfindungsgemäßen Verbindungsmassen, mit denen sowohl polare wie auch unpolare Polymermaterialien genutzt werden können, um zu diesen Materialien korrespondierende Kunststoffbauteile miteinander zu verbinden. Dadurch dass mit Verwendung der erfindungsgemäßen Verbindungsmassen bzw. unter Einsatz der erfindungsgemäßen Verfahren die eingesetzten Lösungsmittel zügig entfernt werden können, geht mit den erfindungsgemäßen Kunststoffbauteilen regelmäßig auch eine verringerte Brandgefahr einher. Besonders überraschend ist auch, dass sich mit den erfindungsgemäßen Verbindungsmassen selbst Kunststoffbauteile aus sehr hochschmelzenden thermoplastischen Polymeren wie Polyamid, PEEK und sogar Polytetrafluorethylen und Polyvinylidendifluorid. Einander ähnliche Thermoplaste könnten auf diese Weise auch gefügt werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verbindungsmasse, insbesondere pastöse Verbindungsmasse, zum stoffschlüssigen Verbinden von zwei oder mehr Kunststoffbauteilen, jeweils enthaltend oder gebildet aus thermoplastischen Polymeren, den Vorstufen duroplastischer Polymere, thermoplastischen Elastomeren oder Elastomeren, umfassend
mindestens ein Lösungsmittel und ein, vorzugsweise darin vollständig oder in Teilen gelöstes oder lösbares, thermoplastisches Polymermaterial, Polymermaterial aus thermoplastischen Elastomeren oder Vorstufen eines duroplastischen Polymermaterials oder Vorstufen für das Polymermaterial aus Elastomeren, jeweils aus den gleichen Polymeren, aus denen die Kunststoffbauteile gebildet oder die hierin enthalten sind, oder aus Polymeren, die mit den Polymeren, aus denen die Kunststoffbauteile gebildet oder die hierin enthalten sind, zumindest in Teilen mischbar sind.

2. Verbindungsmasse nach Anspruch 1, wobei
die thermoplastischen Polymere, die Vorstufen duroplastischer Polymere, die thermoplastischen Elastomere oder die Elastomere polare funktionelle Gruppen enthalten.

3. Verbindungsmasse nach Anspruch 1 oder 2, wobei
das Lösungsmittel ein polares Lösungsmittel darstellt oder umfasst und insbesondere ausgewählt ist aus der Gruppe bestehend aus Ketonen, insbesondere Aceton, Cyclohexanon, Cyclopentanon, 2-Pentanon, 3-Pentanon, Methylisobutylketon und/oder Methylethylketon; Lactonen insbesondere γ-Butyrolacton, Lactamen insbesondere *N*-Methyl-2-pyrrolidon, Nitrilen insbesondere Acetonitril, Propannitril und/oder Benzonitril; Nitroverbindungen, insbesondere Nitroalkane, z.B. Nitromethan, Nitroethan, Nitropropan und/oder Nitrobutan, Carbonsäureamide insbesondere Dimethylformamid, N-Methylformamid, Formamid, Hexamethylphosphorsäuretriamid, und/oder Dimethylacetamid, Harnstoffderivaten, insbesondere Tetramethylharnstoff und/oder Dimethylpropylenharnstoff, Sulfoxiden, insbesondere Dimethylsulfoxid, Sulfonen insbesondere Sulfolan; Carbonsäuren, insbesondere C1- bis C10-Alkansäuren, z.B. Ameisensäure, Essigsäure und/oder Propionsäure, Carbonsäureestern der Ameisensäure, Essigsäure, Propionsäure und/oder Terephthalsäure, insbesondere Ethylacetat, Isopropylacetat, n-Propylacetat, t-Butylacetat, n-Butylacetat, Octylacetat, Ethylpropionat; Anhydriden der Ameisensäure, Essigsäure, Propionsäure und/oder Terephthalsäure; Carbonaten, insbesondere Dimethylcarbonat, Diethylcarbonat und/oder Propylencarbonat; Alkoholen, insbesondere Ethanol, Methanol, 1-Butanol, 2-Butanol, t-Butanol, 2-Propanol, 1-Propanol, 2-Methoxyethanol, Tetrahydrofurylalkohol, Benzylalkohol, Isoamylalkohol, 2-Pentanol, 2-Ethylhexanol und/oder Cyclohexanol; Polyalkoholen, insbesondere Glycerin, Ethylenglykol, Propylenglykol, 1,4-Butandiol, 1,2-Propandiol, 1,3-Propandiol, Di-Propylenglykol, Diemethylenglykol und/oder Diethylenglykol, Etherverbindungen von Polyalkoholen, insbesondere Ethylenglykoldimethylether; Aldehyden, insbesondere Furfural; substituierten Aromaten, insbesondere Chlorbenzol, Dichlorbenzol, Dinitrobenzol, Nitrobenzol, Chinolin und/oder Pyridin, und deren beliebigen Mischungen, gegebenenfalls jeweils versetzt mit einer Mindermenge an Wasser.

4. Verbindungsmasse nach einem der vorstehenden Ansprüche, die wenigsten 5 Gew.-%, bevorzugt wenigstens 10 Gew.-% und besonders bevorzugt wenigstens 30 Gew.-% oder 5 bis 99 Gew.-%, bevorzugt 20 bis 88 Gew.-% und besonders bevorzugt 30 bis 75 Gew.-%, jeweils bezogen auf das Gesamtgewicht der Verbindungsmasse, thermoplastisches Polymermaterial, Polymermaterial aus thermoplastischen Elastomeren und/oder Polymermaterial aus Elastomeren oder Vorstufen eines duroplastischen Polymermaterials oder Vorstufen für das Polymermaterial aus Elastomeren, enthält und/oder wobei das Lösungsmittel einen Masseanteil, bezogen auf das Gesamtgewicht der Verbindungsmasse, im Bereich von 1 Gew.-% bis 90 Gew.-%, insbesondere von 5 Gew.-% bis 80 Gew. % oder von 10 Gew.-% bis 75 Gew %, enthält, wobei die die Verbindungmasse bildenden Komponenten stets 100,0 Gew.-% ergeben.

5. Verbindungsmasse nach einem der vorstehenden Ansprüche, die dazu eingerichtet ist und/oder bei der das Polymermaterial derart auf die thermoplastischen Polymere, die duroplastischen Polymere, die thermoplastischen Elastomere oder die Elastomere der zu verbindenden Kunststoffbauteile abgestimmt ist, dass bei einer Verflüchtigung des Lösungsmittels bei einer vorbestimmten Temperatur, insbesondere Raumtemperatur, die zwei oder mehr Kunststoffbauteile stoffschlüssig miteinander verbindbar sind.

6. Verbindungsmasse nach einem der vorstehenden Ansprüche, wobei
das Lösungsmittel ein Strahlungsabsorber, insbesondere ein Mikrowellen-Absorber, ist und/oder dazu eingerichtet ist, bei einer Einwirkung, insbesondere mittels Mikrowellen, sich derart zu erhitzen, dass das in Teilen in dem Lösungsmittel ungelöste Polymermaterial wenigstens bereichsweise und gegebenenfalls die zwei oder mehr Kunststoffbauteile wenigstens im Bereich der zu verbindenden jeweiligen Verbindungsflächen schmelzeviskos oder schmelzeflüssig vorliegt.

7. Verbindungsmasse nach einem der vorstehenden Ansprüche, wobei
das thermoplastische Polymermaterial und/oder die thermoplastischen Polymere der zu verbindenden Kunststoffbauteile ausgewählt sind aus der Gruppe bestehend aus Polyolefinen, insbesondere Polyethylen und/oder Polypropylen, Polyamiden, Polyimiden, Polyetherimiden, Polyethern, Polysulfonen, Polyetherpolyurethanen, Polyethersulfonen, Polyetherketonen, Polyketonen, Polyestern, Polyacrylaten, insbesondere Polymethylmethacrylat, Polyvinylchlorid, Polyvinylidendifluorid, Polycarbonat, Acrylnitril/Butadien/Styrol-Copolymeren und deren beliebigen Mischungen oder dass das duroplastische Polymermaterial und/oder die duroplastischen Polymere der zu verbindenden Kunststoffbauteile ausgewählt sind aus der Gruppe bestehend aus Epoxyharzen, Methacrylatharzen, Phenolharzen, Polyesterharzen, z.B. ungesättigten Polyesterharzen, Polyurethanharzen, z.B. Zwei-Komponenten-Polyurethanschäume, Vinylesterharzen, z.B. ungesättigten Vinylesterharzen, vernetzten, insbesondere strahlenvernetzten, Thermoplaste, z.B. strahlenvernetztem Polypropylen, und deren beliebigen Mischungen oder dass die Polymere der thermoplastischen Elastomere und/oder das Polymermaterial aus den thermoplastischen Elastomeren ausgewählt ist aus der Gruppe bestehend aus thermoplastischen Elastomeren auf Basis von Ethylen-Vinylacetat-Copolymeren; Polyhydroxybutyrat; Polylactiden; Polyetherimiden; Polyoxymethylen; Polycarbonaten; Polystyrol; schlagzähmodifiziertem Polystyrol; Styrol-basierten Copolymeren, insbesondere ABS, SAN, PS, HIPS, ASA und/oder SEBS; olefinisch-basierten thermoplastischen Elastomeren, insbesondere LLDPE, EOC, TPV und/oder EVA; PE/Polyesterbasierten thermoplastischen Elastomeren; Urethan-basierten thermoplastischen Elastomeren; Polyether-Block-Amiden; PVC; Polyurethanen, insbesondere thermoplastischen Polyurethanen, und thermoplastischer Stärke und beliebigen Mischungen hiervon, oder dass die Polymere der Elastomere und/oder das Polymermaterial aus den Elastomeren Elastomere ausgewählt sind aus der Gruppe bestehend aus Acrylnitril/Butadien/Acrylat-Copolymeren, Acrylnitril/chloriertes Polyethylen/Styrol-Copolymeren, Acrylnitril/Methylmethacrylat-Copolymeren, Ethylen-Ethylacrylat-Copolymeren, Ethylen-Propylen-Copolymeren, Ethylen-Propylen-Dien-Copolymeren, Vinylchlorid/Ethylen-Copolymeren, Vinylchlorid/Ethylen/Methacrylat-Copolymeren, Polyisobutylen, Polyvinylbutyral, Butadien-Kautschuk, Butylkautschuk, Chloropren-Kautschuk, Fluor-Kautschuk, Isopren-Kautschuk, Natur-Kautschuk, Silikon-Kautschuk, Styrol-butadien-Kautschuk und deren beliebigen Mischungen, insbesondere auf Basis von Polyethylen, Polypropylen, Polyamiden, Polyethylenterephthalat oder Polybutylenterephthalat.

8. Verbindungsmasse nach einem der vorstehenden Ansprüche, wobei
die thermoplastischen Polymere oder die duroplastischen Polymere oder die Polymere der thermoplastischen Elastomeren oder die Polymere der Elastomere der Kunststoffbauteile jeweils übereinstimmen und/oder das thermoplastische Polymer oder duroplastische Polymer oder das Polymer der thermoplastischen Elastomere oder das Polymer der Elastomere der Kunststoffbauteile und das thermoplastische Polymermaterial, die Vorstufe des duroplastischen Polymermaterial, das Polymermaterial der thermoplastischen Elastomere bzw. das Polymermaterial der Elastomervorstufe der Verbindungsmasse jeweils übereinstimmen.

9. Verbindungsmasse nach einem der vorstehenden Ansprüche, wobei
das thermoplastische Polymer, das duroplastische Polymer, das Polymer des thermoplastischen Elastomeren oder das Polymer des Elastomeren wenigstens eines Kunststoffbauteils und/oder das thermoplastische Polymermaterial, das duroplastische Polymermaterial, das Polymermaterial der thermoplastischen Elastomere oder das Polymermaterial der Elastomeren oder die Vorstufen des duroplastischen Polymermaterials oder die Vorstufen für das Polymermaterial aus Elastomeren der Verbindungsmasse Fasern, insbesondere Glasfasern, enthalten/enthält.

10. Verbindungsmasse nach einem der vorstehenden Ansprüche, wobei
die Verbindungsmasse mindestens einen Mikrowellen-Absorber, insbesondere ausgewählt aus der Gruppe bestehend aus anorganischen Alkalisalzen, insbesondere Natriumchlorid, Kaliumfluorid und/oder Kaliumiodid, gegebenenfalls in Kombination mit Al₂O₃; anorganischen Erdalkalisalzen, insbesondere Calciumchlorid; Alkalisalzen von Carbonsäuren, insbesondere von Alkansäuren; Erdalkalisalzen von Carbonsäuren, insbesondere von Alkansäuren; Spinellen, insbesondere Magnetit, CuNi_{0,5}Mn_{1,5}O₄, V₂O₅ und/oder Al₂O₃; Metallpulver, insbesondere Ni, Fe und/oder Co; Ruß; Siliziumkarbid; Fullerene; Kohlenstoffnanoröhren; Graphit; Graphen; Aktivkohle; organischen Füllstoffen, insbesondere Viskosefasern, Weinsäure, den Salzen der Weinsäure und/oder Xylit; und deren beliebigen Mischungen, enthält.

11. Verbindungsmasse nach einem der vorstehenden Ansprüche, wobei
die thermoplastischen Polymere unpolare funktionelle Gruppen enthalten.

12. Verbindungsmasse nach einem der vorstehenden Ansprüche, wobei
das Lösungsmittel ein unpolares Lösungsmittel darstellt und insbesondere ausgewählt ist aus der Gruppe bestehend aus aromatischen Lösungsmitteln, insbesondere Toluol, Xylol und/oder Benzol, aliphatischen Lösungsmitteln, insbesondere Cyclohexan, Hexan, Heptan und/oder Pentan, etherischen Lösungsmitteln, insbesondere Diethylether und/oder Tetrahydrofuran, chlorierten Lösungsmitteln, insbesondere Dichlormethan, Chloroform und/oder Dichlorethan, fluorierten Lösungsmitteln, insbesondere Perfluorhexan, und deren beliebigen Mischungen.

13. Verbindungsmasse nach einem der vorstehenden Ansprüche, wobei die thermoplastischen Polymere mit unpolaren funktionellen Gruppen der zu verbindenden Kunststoffbauteile ausgewählt sind aus der Gruppe bestehend aus Polyolefinen, insbesondere Polyethylen und/oder Polypropylen, Polybuten, Polyisobuten, Polyetherketonen insbesondere PEK, PEEK, Polyethylenterephthalat, Polybutylenterephthalat, Polyphenylensulfid, Polyphenylensulfone, Polyacetal, insbesondere Polyoxymethylen, Polystyrol, Polytetrafluorethylen und deren beliebigen Mischungen.

14. Verbindungsmasse nach einem der vorstehenden Ansprüche, wobei
die duroplastischen Polymere, teilvernetzte duroplastische Polymere, bevorzugt mit einem Vernetzungsgrad von maximal 80 %, besonders bevorzugt mit einem Vernetzungsgrad von maximal 70 %, darstellen und/oder wobei das duroplastische Polymermaterial teilvernetztes duroplastisches Polymermaterial, bevorzugt mit einem Vernetzungsgrad von maximal 80 %, besonders bevorzugt mit einem Vernetzungsgrad von maximal 70 %, darstellt, oder wobei die Vorstufen des duroplastischen Polymermaterials unvernetzt vorliegen.

15. Verbindungsmasse nach einem der vorstehenden Ansprüche, wobei
diese eine Suspension oder eine Lösung darstellt.

16. Verbindungsmasse nach einem der vorstehenden Ansprüche, **gekennzeichnet durch** eine Viskosität, bestimmt gemäß DIN EN ISO 3219:1994-10 bei einer Temperatur von 20 °C, im Bereich von 10³ mPas bis 8×10⁶ mPas.

17. Verbindungsmasse nach einem der vorstehenden Ansprüche, wobei
das Polymermaterial thermoplastisches Hochtemperatur-Polymermaterial, insbesondere Polyetheretherketone, Polyetherketone, Polyimide, Polyamidimide, Polysulfone, Polyethersulfone, Polyvinylidendifluorid, Polyphenylensulfone, Polyphenylensulfid und/oder Polyacetale, darstellt und wobei das Lösungsmittel eine Permittivität (bei 25 °C) größer oder gleich 15, insbesondere größer oder gleich 20, aufweist und/oder ein protisches Lösungsmittel, insbesondere eine Carbonsäure, darstellt.

18. Verbindungsmasse nach Anspruch 17, wobei
diese neben dem Lösungsmittel im Wesentlichen frei von Mikrowellen-Absorbern ist.

19. Verbindungsmasse nach einem der vorstehenden Ansprüche, wobei
das Polymermaterial unpolares thermoplastisches Polymermaterial, insbesondere Polyolefine, z.B. Polyethylen und/oder Polypropylen, darstellt und wobei das Lösungsmittel eine Permittivität (bei 25 °C) kleiner 15, bevorzugt kleiner 10 und besonders bevorzugt kleiner 5, aufweist.

20. Verbindungsmasse nach Anspruch 19, wobei
diese mindestens einen Mikrowellen-Absorbern enthält, insbesondere in einer Menge im Bereich von 0,01 bis 5 Gew.-%, bevorzugt im Bereich von 0,1 bis 1,0 Gew.-%, jeweils bezogen auf die Menge an Polymermaterial.

21. Verbindungsmasse nach einem der vorstehenden Ansprüche, wobei
das Polymermaterial, insbesondere das thermoplastische Polymermaterial, als Granulat und/oder in Pulverform eingesetzt wird.

22. Verbindungsmasse nach einem der vorstehenden Ansprüche, die wenigsten 5 Gew.-%, bevorzugt wenigstens 10 Gew.-% und besonders bevorzugt wenigstens 30 Gew.-%, jeweils bezogen auf das Gesamtgewicht der Verbindungsmasse, in dem Lösungsmittel gelöstes thermoplastisches Polymermaterial, der Vorstufe von Duroplasten, duroplastisches Polymermaterial, Polymermaterial aus thermoplastischen Elastomeren, Polymermaterial aus Vorstufen von Elastomeren und/oder Polymermaterial aus Elastomeren enthält oder wenigsten 5 Gew.-%, bevorzugt wenigstens 10 Gew.-% und besonders bevorzugt wenigstens 30 Gew.-%, jeweils bezogen auf das Gesamtgewicht der Verbindungsmasse, in dem Lösungsmittel gelöste Vorstufen des duroplastischen Polymermaterials und/oder gelöste Vorstufen für das Polymermaterial aus Elastomeren.

23. Verbindungsmasse nach einem der vorstehenden Ansprüche, enthaltend
das Lösungsmittel in einer Menge, die ausreicht, das, insbesondere in Pulverform vorliegende oder eingesetzte, Polymermaterial vollständig zu benetzen.

24. Verbindungsmasse nach einem der vorstehenden Ansprüche, wobei
das Polymermaterial aus Elastomeren einen Vernetzungsgrad, bestimmt gemäß (in Anlehnung an DIN 16892:2019-10), nicht oberhalb von 60 %, vorzugsweise nicht oberhalb von 50 %, aufweist und/oder
das Polymermaterial einen unvernetzten Kautschuk oder eine unvernetzte Kautschukmischung oder eine unvernetzte Vorstufe eines Duroplasten umfasst.

25. Verbindungsmasse nach einem der vorstehenden Ansprüche, wobei
das Polymermaterial, vorzugsweise in einer Hauptmenge, mindestens ein thermoplastisches Polymer, insbesondere Polyamid und/oder PEEK, darstellt oder umfasst und wobei das Lösungsmittel eine C1- bis C6-Alkansäure, insbesondere Methansäure, vorzugsweise im Gemisch mit einer Mindermenge an Wasser, darstellt oder umfasst.

26. Verbindungsmasse nach einem der vorstehenden Ansprüche, wobei
das Polymermaterial, vorzugsweise in einer Mindermenge, Polytetrafluorethylen und/oder Polyvinylidendifluorid darstellt oder umfasst und wobei das Lösungsmittel ein fluoriertes Lösungsmittel, insbesondere Perfluorhexan, oder Dimethylformamid darstellt oder umfasst.

27. Verbindungsmasse nach einem der vorstehenden Ansprüche, wobei
das Polymermaterial, vorzugsweise in einer Hauptmenge, Polyetherpolyurethan darstellt oder umfasst und wobei das Lösungsmittel Diemthylformamid, Dimethylacetamid und/oder Aceton darstellt oder umfasst.

28. Verbindungsmasse nach einem der vorstehenden Ansprüche, wobei
das Polymermaterial, vorzugsweise in einer Hauptmenge, mindestens ein unpolares thermoplastisches Polymer, insbesondere Polyethylen und/oder Polypropylen, umfasst oder darstellt und wobei das Lösungsmittel Hexan, Heptan und/oder Cyclohexan umfasst.

29. Verbindungsmasse nach einem der vorstehenden Ansprüche, wobei
das Polymermaterial, vorzugsweise in einer Hauptmenge, mindestens ein unpolares thermoplastisches Polymer, insbesondere Polystyrol, umfasst oder darstellt und wobei das Lösungsmittel Aceton umfasst oder darstellt.

30. Verbindungsmasse nach einem der vorstehenden Ansprüche, wobei
das Polymermaterial, vorzugsweise in einer Hauptmenge, Polymethylmethacrylat und/oder Polycarbonat umfasst oder darstellt und wobei das Lösungsmittel Nitroalkane, insbesondere Nitromethan, Nitroethan, Nitropropan und/oder Nitrobutan, Aceton, Dichlormethan, Ethylacteat, n-Propyl- und n-Butylacetat, Toluol und/oder Xylol umfasst oder darstellt.

31. Bausatz zum Herstellen eines Kunststoffteils, insbesondere eines Kraftfahrzeugbauteils, wie eines Abdeckungsbauteils, einer Medienleitung und/oder eines Medienverteilers, Aktuator, Batterieeinkapselung, Scheinwerferabdeckung oder Dichtungs- und/oder Entkopplungselement, umfassend mindestens ein, insbesondere nach einem der vorstehenden Ansprüche ausgebildetes, erstes und mindestens ein, insbesondere nach einem der vorstehenden Ansprüche ausgebildetes, zweites Kunststoffbauteil, jeweils enthaltend oder gebildet aus thermoplastischen Polymeren oder duroplastischen Polymeren oder thermoplastischen Elastomeren oder Elastomeren, und eine nach einem der vorstehenden Ansprüche ausgebildete Verbindungsmasse zum stoffschlüssigen Verbinden des ersten und zweiten Kunststoffbauteils.

32. Bausatz zum Herstellen eines Kunststoffteils, insbesondere eines Kraftfahrzeugbauteils, wie eines Abdeckungsbauteils, einer Medienleitung und/oder eines Medienverteilers, Aktuator, Batterieeinkapselung, Scheinwerferabdeckung oder Dichtungs- und/oder Entkopplungselement, umfassend mindestens ein erstes und mindestens ein zweites Kunststoffbauteil, jeweils enthaltend oder gebildet aus thermoplastischen Polymeren, und eine Verbindungsmasse, insbesondere nach einem der Ansprüche 1 bis 30, zum stoffschlüssigen Verbinden des ersten und zweiten Kunststoffbauteils, wobei die Verbindungsmasse mindestens ein polares Lösungsmittel und eine Menge an mindestens einem thermoplastischen Polymermaterial mit polaren funktionellen Gruppen aufweist, wobei diese Menge an dem mindestens einem thermoplastischen Polymermaterial vollständig oder in Teilen gelöst in dem mindestens einen polaren Lösungsmittel vorliegt.

33. Bausatz zum Herstellen eines Kunststoffteils, insbesondere eines Kraftfahrzeugbauteils, wie eines Abdeckungsbauteils, einer Medienleitung und/oder eines Medienverteilers, Aktor, Batterieeinkapselung, Scheinwerferabdeckung oder Dichtungs- und/oder Entkopplungselement, umfassend mindestens ein erstes und mindestens ein zweites Kunststoffbauteil, jeweils enthaltend oder gebildet aus thermoplastischen Polymeren, und eine Verbindungsmasse, insbesondere nach einem der Ansprüche 1 bis 30, zum stoffschlüssigen Verbinden des ersten und zweiten Kunststoffbauteils, wobei die Verbindungsmasse mindestens ein unpolares Lösungsmittel, eine Menge an mindestens einem thermoplastischen Polymermaterial mit unpolaren funktionellen Gruppen, wobei diese Menge an dem mindestens einem thermoplastischen Polymermaterial vollständig oder in Teilen gelöst in dem mindestens einen unpolaren Lösungsmittel vorliegt, und/oder mindestens einen Mikrowellen-Absorber, insbesondere Kaliumfluorid, Graphit, Graphen, Ruß, Kohlenstoffnanoröhren, Aktivkohle, Viskosefasern, Weinsäure, den Salzen der Weinsäure, NiZn-Ferrit, Metallsalze der Polymerbestandteile und/oder Metallsalze des Lösungsmittels, aufweist.

34. Verfahren zum Herstellen eines Kunststoffteils, bei dem mindestens ein erstes und mindestens ein zweites Kunststoffbauteil, jeweils enthaltend oder gebildet aus thermoplastischen Polymeren, duroplastischen Polymeren, thermoplastischen Elastomeren oder Elastomeren, bereitgestellt werden und eine nach einem der vorstehenden Ansprüche 1 bis 30 ausgebildete, insbesondere pastöse, Verbindungsmasse zwischen und/oder auf jeweilige Verbindungsflächen der Kunststoffbauteile ein- und/oder aufgebracht wird, wobei die Verbindungsmasse mindestens ein Lösungsmittel und ein darin vollständig oder in Teilen gelöstes thermoplastisches Polymermaterial oder Polymermaterial aus thermoplastischen Elastomeren oder Polymermaterial aus unvernetzten Elastomervorstufen aus den gleichen Polymeren, aus denen die Kunststoffbauteile gebildet oder die hierin enthalten sind, oder aus Polymeren, die mit den Polymeren, aus denen die Kunststoffbauteile gebildet oder die hierin enthalten sind, zumindest in Teilen mischbar sind, aufweist, wobei eine Verbindung zwischen dem erstem Kunststoffbauteil, dem Polymermaterial der Verbindungsmasse und dem zweitem Kunststoffbauteil durch Verflüchtigen des Lösungsmittels erfolgt.

35. Verfahren nach Anspruch 34, wobei
die zwei oder mehr Kunststoffbauteile stoffschlüssig miteinander verbunden werden.

36. Verfahren nach einem der Ansprüche 34 oder 35, wobei
das Verflüchtigen des Lösungsmittels bei einer vorbestimmten Temperatur, insbesondere Raumtemperatur, erfolgt.

37. Verfahren nach einem der Ansprüche 34 bis 36, wobei
wenigstens die Verbindungsmasse erwärmt wird, insbesondere mittels Mikrowellen.

38. Verfahren nach Anspruch 37, wobei
sich das Lösungsmittel und/oder der Strahlungsabsorber, insbesondere der Mikrowellen-Absorber, derart erhitzt, dass das thermoplastische Polymermaterial oder das Polymermaterial aus thermoplastischen Elastomeren wenigstens bereichsweise und gegebenenfalls die wenigstens zwei Kunststoffbauteile wenigstens im Bereich der zu verbindenden Verbindungsflächen in den schmelzflüssigen Zustand überführt werden oder wobei
sich das Lösungsmittel und/oder der Strahlungsabsorber, insbesondere der Mikrowellen-Absorber, derart erhitzt, dass das duroplastische Polymermaterial oder das Polymermaterial aus Elastomeren mit dem duroplastischem Polymermaterial bzw. dem Polymermaterial aus Elastomeren der wenigstens zwei zu verbindenden Kunststoffbauteile wenigstens im Bereich der zu verbindenden Verbindungsflächen wenigstens bereichsweise Vernetzungsreaktionen eingehen.

39. Verfahren nach einem der Ansprüche 34 bis 38, wobei
die Verbindungsmasse durch das Erwärmen, insbesondere mittels MikrowellenStrahlung, in den Zustand einer Suspension oder einer Lösung überführt wird.

40. Verfahren zum Verbinden von Kunststoffbauteilen, umfassend die Schritte
a) Zurverfügungstellen eines Bausatzes nach einem der Ansprüche 31 bis 33,
b) gegebenenfalls Zurverfügungstellen einer Heiz- oder Bestrahlungseinrichtung,
c) Aufbringen der Verbindungsmasse auf einer Verbindungsfläche des ersten und/oder zweiten Kunststoffbauteils,
d) Kontaktieren von erstem und zweitem Kunststoffbauteil im Bereich der Verbindungsfläche, auf der in Schritt c) die Verbindungsmasse aufgebracht wurde, und
e) Verflüchtigen des Lösungsmittels der Verbindungsmasse und gegebenenfalls Anschmelzen des Polymermaterials der Verbindungsmasse und der Polymere an Kontaktflächen der Kunststoffbauteile, insbesondere unter Wärmeeinwirkung mit Hilfe der Heiz- oder Bestrahlungseinrichtung, unter Verbindung von erstem und zweitem Kunststoffbauteil.

41. Verfahren zum Verbinden von Kunststoffbauteilen, umfassend die Schritte
a) Zurverfügungstellen eines Bausatzes nach einem der Ansprüche 31 bis 33,
b) Zurverfügungstellen eines Mikrowellenstrahlers,
c) Anbringen der Verbindungsmasse auf einer Verbindungsfläche des ersten und/oder zweiten Kunststoffbauteils,
d) Kontaktieren von erstem und zweitem Kunststoffbauteil im Bereich der Verbindungsfläche, auf der in Schritt c) die Verbindungsmasse aufgebracht wurde, und
e) Beaufschlagen der gemäß Schritt d) kontaktierten ersten und zweiten Kunststoffbauteile im Bereich der Verbindungsfläche, auf der in Schritt c) die Verbindungsmasse aufgebracht wurde, mit Mikrowellenstrahlung des Mikrowellenstrahlers unter Verflüchtigung des Lösungsmittels und gegebenenfalls Anschmelzens des Polymermaterials der Verbindungsmasse und der Polymere an Kontaktflächen der Kunststoffbauteile und Verbindung von erstem und zweitem Kunststoffbauteil.

42. Kraftfahrzeugbauteil, insbesondere Abdeckungsbauteil, Medienleitung und/oder Medienverteiler, Aktor, Batterieeinkapselung, Scheinwerferabdeckung oder Dichtungs- und/oder Entkopplungselement, das insbesondere nach dem Verfahren gemäß einem der Ansprüche 34 bis 41 hergestellt ist, umfassend zwei oder mehr Kunststoffbauteile, jeweils enthaltend oder gebildet aus thermoplastischen Polymeren, die mittels einer nach einem der vorstehenden Ansprüche 1 bis 30 ausgebildeten Verbindungsmasse stoffschlüssig miteinander verbunden sind.

43. Verwendung des Bausatzes nach einem der Ansprüche 31 bis 33 für die Herstellung eines Kraftfahrzeugbauteils oder für das, insbesondere stoffschlüssige, Verbindungen von Kunststoffbauteilen aus thermoplastischen Polymeren.

44. Verwendung von flüssigen Carbonsäuren, insbesondere C1- bis C6-Alkansäuren, z.B. Methansäure, Essigsäure und/oder Propionsäure, oder von wässrigen Systemen, enthaltend mindestens eine flüssige Carbonsäure, insbesondere eine C1- bis C6-Alkansäure, z.B. Methansäure, Essigsäure und/oder Propionsäure, für das Verbinden von zwei oder mehr Kunststoffbauteilen, jeweils enthaltend oder gebildet aus thermoplastischen Polymeren, duroplastischen Polymeren, thermoplastischen Elastomeren oder Elastomeren, mittels Mikrowellenstrahlung.
